# EUROPÄISCHE PATENTANMELDUNG

(11) **EP 2 109 019 A1**
(43) Veröffentlichungstag der Anmeldung: **14.10.2009**
(21) Anmeldenummer: 08006931.3
(22) Anmeldetag: 07.04.2008
(51) Int. Cl.: G05B 19/418

(54) **Verfahren zur Steuerung eines Rezeptes eines Chargenprozesses**

(71) Anmelder: SIEMENS AKTIENGESELLSCHAFT, 80333 München (DE)
(72) Erfinder: Rosskopf, Harald, 76327 Pfinztal-Wöschbach (DE)

(57) **Zusammenfassung**

Die Erfindung betrifft ein Verfahren zur Steuerung eines Rezeptes eines Chargenprozesses, das mehrere Rezeptphasen (4; 5) aufweist, wobei das Rezept auf einer Anzeigeeinheit dargestellt wird und wobei diesen Rezeptphasen (4; 5) zugeordnete Funktionsbausteine mittels eines Automatisierungsgerätes abgearbeitet werden. Zur Laufzeit einer Charge kann es nun vorkommen, dass ein Operator den Chargenprozess anhalten bzw. unterbrechen möchte, um beispielsweise Wartungsarbeiten zu bewerkstelligen oder um eine manuelle Bedienung vornehmen zu können. Dazu benötigt der Operator gewöhnlich geeignete Informationen von dem Rezeptersteller, um entscheiden zu können, an welcher Stelle bzw. an welchen Stellen des Rezeptes eine Unterbrechung unschädlich ist. Es werden Maßnahmen vorgeschlagen, welche eine störende Unterbrechung eines Chargenprozesses weitgehend verhindern.

## Beschreibung

Die Erfindung betrifft ein Verfahren zur Steuerung eines Rezeptes eines Chargenprozesses, das mehrere Rezeptphasen aufweist, wobei das Rezept auf einer Anzeigeeinheit dargestellt wird und wobei diesen Rezeptphasen zugeordnete Funktionsbausteine mittels eines Automatisierungsgerätes abgearbeitet werden. Ferner betrifft die Erfindung ein Computerprogramm, welches während seines Ablaufs auf einem Programmiergerät in Wirkverbindung mit einem Automatisierungsgerät ein Rezept eines Chargenprozesses steuert, und darüber hinaus ein Programmiergerät mit einem derartigen Computerprogramm.

Ein Computerprogramm zur Verwirklichung eines Verfahrens gemäß dem Oberbegriff des Anspruchs 1 ist aus dem Siemens-Katalog "ST PCS 7 - März 2007", SIMATIC PCS 7, Seite 4/7 und Kapitel 6 bekannt. Ein Rezeptersteller formuliert mittels einer so genannten, auf einem Programmiergerät ablauffähigen "BATCH Software" grafisch auf einer Anzeigeeinheit ein Rezept zur Steuerung eines Chargenprozesses. Dieses Rezept weist mehrere Rezeptphasen auf, die ausgehend von einem Startpunkt sequentiell durch ein Chargensteuerungsprogramm des Programmiergeräts abgearbeitet werden, wobei korrespondierend dazu ein mit dem Programmiergerät online verbundenes Automatisierungsgerät zu jeder Rezeptphase jeweils einen dieser Rezeptphase zugeordneten Funktionsbaustein abarbeitet.
Zur Laufzeit einer Charge kann es nun vorkommen, dass ein Operator den Chargenprozess anhalten bzw. unterbrechen möchte, um beispielsweise Wartungsarbeiten an einer Dosieranlage zu bewerkstelligen oder um eine manuelle Bedienung vornehmen zu können. Dies bedeutet insbesondere im Hinblick auf chemische Prozesse mit unterschiedlich zusammenhängenden Rezeptphasen, dass der Operator wissen muss, ob es überhaupt möglich ist, die aktuell aktive Rezeptphase oder zusammenhängende zeitlich aufeinander folgende Rezeptphasen anzuhalten, ohne dass es zu Störungen des Chargenprozesses oder zu Störungen in der technischen Anlage kommt; denn es kann vorkommen, dass eine derartige Unterbrechung das Produkt oder ein Zwischenprodukt unbrauchbar macht oder dass eine flüssige Substanz während der Dauer der Unterbrechung sich verfestigt und dadurch für den weiteren Chargenprozess nach der Unterbrechung nicht mehr geeignet ist. Mit anderen Worten: der Operator braucht geeignete Informationen von dem Rezeptersteller, um entscheiden zu können, an welcher Stelle bzw. an welchen Stellen des Rezeptes eine Unterbrechung unschädlich ist.

Der vorliegenden Erfindung liegt die Aufgabe zugrunde, ein Verfahren der eingangs genannten Art anzugeben, welches eine störende Unterbrechung eines Chargenprozesses weitgehend verhindert. Ferner ist ein Computerprogramm anzugeben, welches während seines Ablaufs auf einem Programmiergerät in Wirkverbindung mit einem Automatisierungsgerät ein Rezept eines Chargenprozesses steuert und zur Verwirklichung eines derartigen Verfahrens geeignet ist. Darüber hinaus ist ein geeignetes Programmiergerät mit einem derartigen Computerprogramm zu schaffen.

Im Hinblick auf das Verfahren wird diese Aufgabe durch die im kennzeichnenden Teil des Anspruchs 1, im Hinblick auf das Computerprogramm durch die im kennzeichnenden Teil des Anspruchs 4 und im Hinblick auf das Programmiergerät durch die im kennzeichnenden Teil des Anspruchs 7 angegebenen Maßnahmen gelöst.

Vorteilhaft ist, dass ein Operator von dem Rezeptersteller keine Informationen mehr benötigt, an welchen Stellen des Rezeptes eine Chargenprozess-Unterbrechung möglich oder nicht möglich ist. Der Operator braucht nicht zu wissen, ob es überhaupt möglich ist, die aktuell aktive Rezeptphase oder zusammenhängende zeitlich aufeinander folgende Rezeptphasen anzuhalten, ohne dass es zu Störungen des Chargenprozesses oder zu Störungen in der technischen Anlage kommt. Fehlerhafte bzw. störende Unterbrechungen des Chargenprozesses werden vermieden. Der Operator kann während der Rezeptverarbeitung an einer beliebigen Stelle des auf der Anzeigeeinheit dargestellten Rezeptes eine Chargenunterbrechungsanforderung stellen, z. B. in der Art und Weise, dass er z. B. ein "Haltesymbol" eines Applikationsmenüs anwählt und aktiviert oder eine Rezeptphase in einem Rezeptabschnitt, welcher aus einer Rezeptphase oder aus zusammenhängenden zeitlich aufeinander folgenden Rezeptphasen oder aus zusammenhängenden zeitlich aufeinander folgenden Rezeptphasen und Weiterschaltbedingungen (Transitionen) besteht, mittels einer so genannten Maus zunächst markiert und anschließend mit der rechten Maustaste die Chargenunterbrechungsanforderung startet. Ob die Chargenunterbrechungsanforderung sofort verarbeitet und der Chargenprozess unterbrochen wird, ist davon abhängig, ob der Rezeptersteller diesen Rezeptabschnitt im Rahmen der Rezepterstellung mittels eines Programmiergerätes als "unterbrechbar" bewertet hat. Für den Fall, dass dieser Rezeptabschnitt nicht unterbrochen werden darf, selektiert der Rezeptersteller diesen Rezeptabschnitt als nicht unterbrechbar. Dies bewirkt, dass der Operator zwar eine Unterbrechung anfordern kann, diese wird allerdings während der Ver- bzw. Bearbeitung einer Rezeptphase in einem als ununterbrechbar gekennzeichneten Rezeptabschnitt abgewiesen oder verzögert. Dabei bedeutet "verzögert", dass zunächst die Unterbrechungsanforderung abgewiesen und erst nach der Bearbeitung des als ununterbrechbar gekennzeichneten Rezeptabschnitts diese aktiviert und der Chargenprozess angehalten wird. Die diesem Rezeptabschnitt zugeordneten Funktionsbausteine auf dem Automatisierungsgerät werden nicht angehalten. Für den Fall, dass die Unterbrechungsanforderung verzögert verarbeitet wird, wechselt erst nach der Abarbeitung dieser Funktionsbausteine das Automatisierungsgerät in einen Stopp-Zustand. Für den Fall, dass lediglich die Unterbrechung blockiert werden soll, verhindert das Programmiergerät, dass dem Automatisierungsgerät eine entsprechende Unterbrechungsanforderung übermittelt wird. Für den Fall, dass das Automatisierungsgerät nach der Abarbeitung der diesem Rezeptabschnitt zugeordneten Funktionsbausteine in einen Stopp-Zustand wechseln soll, übermittelt das Programmiergerät dem Automatisierungsgerät die entsprechende Unterbrechungsanforderung, nachdem das Automatisierungsgerät dem Programmiergerät die Abarbeitung der Funktionsbausteine gemeldet hat.
Dadurch, dass die Chargenunterbrechungsanforderungen auf dem Programmiergerät während der Abarbeitung des Chargensteuerungsprogramms verarbeitet werden, brauchen keine Änderungen in den in das Automatisierungsgerät geladenen Funktionsbausteinen vorgenommen zu werden, eine Anpassung dieser Funktionsbausteine ist nicht erforderlich.

In einer Ausgestaltung der Erfindung ist vorgesehen, dass dem Operator die durch den Rezeptersteller selektierten, nicht unterbrechbaren Rezeptphasen auf der Anzeigeeinheit gekennzeichnet werden. Dadurch wird angezeigt, dass eine Chargenunterbrechungsanforderung während der Ver- bzw. Bearbeitung dieser Rezeptphasen nicht unmittelbar ausgeführt wird.

Weitere vorteilhafte Ausgestaltungen der Erfindung ergeben sich aus den weiteren Unteransprüchen.

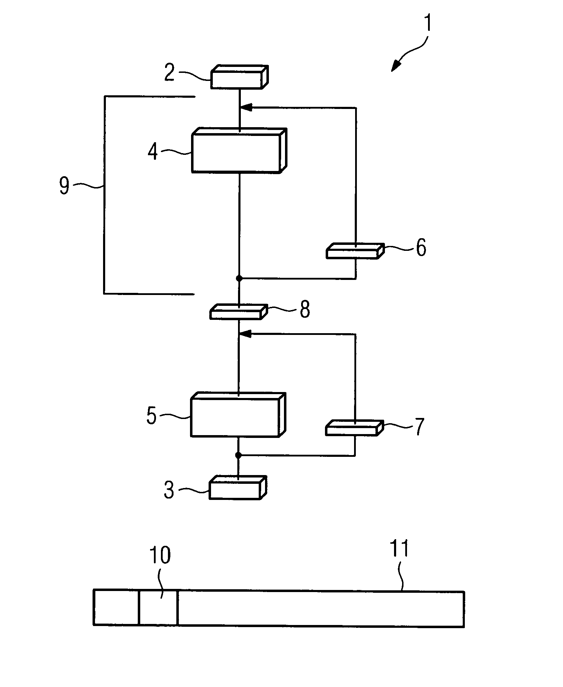

Die Erfindung sowie deren Ausgestaltungen und Vorteile werden nachfolgend anhand eines Ausführungsbeispiels unter Bezugnahme auf die einzige Figur der Zeichnung näher erläutert.

Die Figur der Zeichnung zeigt ein Rezept eines Chargenprozesses in Form eines mit 1 bezeichneten Funktionsplans. Dieser Funktionsplan 1 weist einen Start- und einen Ende-Schritt 2, 3 auf und umfasst ferner eine erste Rezeptphase in Form einer Dosierphase 4, eine der Dosierphase 4 nachgeschaltete zweite Rezeptphase in Form einer Heizphase 5 sowie Weiterschaltbedingungen 6, 7, 8. Ein Rezeptersteller formuliert den Funktionsplan 1 mittels eines so genannten, an sich bekannten SFC(Sequential Function Chart)-Editors, der auf einem hier nicht dargestellten Programmiergerät ablauffähig ist. Dieses Programmiergerät, das auch zur Erstellung von der Dosier- und der Heizphase 4, 5 zugeordneten Funktionsbausteinen mittels einer geeigneten Engineering-Software vorgesehen sein kann, weist eine Anzeigeeinheit auf, auf welcher der Funktionsplan 1 darstellbar ist. Während der Steuerung des Chargenprozesses arbeitet ein geeignetes Chargensteuerungsprogramm des Programmiergerätes den Funktionsplan 1 sequentiell ab, wobei korrespondierend dazu ein mit dem Programmiergerät in Wirkverbindung stehendes Automatisierungsgerät die der Dosier- und der Heizphase 4, 5 zugeordneten Funktionsbausteine abarbeitet und wobei die Dosierphase 4 dem Funktionsbaustein einen Sollwert und dieser Funktionsbaustein der Dosierphase 4 einen Istwert übermittelt. Entsprechend führt die Heizphase 5 dem dieser Heizphase 5 zugeordneten Funktionsbaustein einen Sollwert und dieser Funktionsbaustein der Heizphase 5 einen Istwert zu. Die Funktionsbausteine steuern zusammen mit weiterer geeigneter Hard- und Software die Dosier- und Heizvorgänge in einer technischen Anlage, z. B. die Dosierung und das Heizen von Substanzen in der Pharmaindustrie zur Herstellung von Arzneimitteln. Das Chargensteuerungsprogramm und der Editor zur Erstellung des Rezeptes können selbstverständlich als ein Computerprogramm bzw. Software-Werkzeug verwirklicht sein.

Um zu verhindern, dass ein Operator, welcher das Chargensteuerungsprogramm bedient, während der sequentiellen Abarbeitung des Rezeptes dieses Chargenprozesses diese Abarbeitung unterbricht, sind geeignete Maßnahmen im Rahmen der Rezepterstellung vorgesehen. Der Rezeptersteller kennzeichnet bzw. markiert die Rezeptphase oder die Rezeptphasen, welche während der Steuerung des Chargenprozesses nicht unterbrochen werden dürfen. Für den Fall, dass ein Rezeptabschnitt, welcher z. B. die Dosierphase 4 mit dazugehöriger Weiterschaltbedingung 6 umfasst, nicht unterbrochen werden darf, kennzeichnet der Rezeptersteller mittels einer Bedieneingabe-Einheit diesen Abschnitt 4, 6 beispielsweise mit einer Klammer 9. Diese Kennzeichnung bewirkt, dass während der Steuerung des Chargenprozesses, d. h. während der Abarbeitung des Funktionsplans 1 durch das Chargensteuerungsprogramm, der Operator den Chargenprozess nicht unterbrechen kann. Der Rezeptersteller kann unterschiedliche Kennzeichnungen vorsehen, von denen zwar jede eine Unterbrechung verhindert, allerdings die Weiterverarbeitung einer Unterbrechungsanforderung durch den Operator verschieden ausführt. Eine erste Kennzeichnung, z. B. in Form einer eckigen Klammer, bewirkt, dass die Unterbrechungsanforderung blockiert bzw. ignoriert wird, eine zweite Kennzeichnung, z. B. in Form einer geschweiften Klammer, bewirkt dagegen, dass die Unterbrechungsanforderung zunächst blockiert und erst nach der Verarbeitung der Dosierphase 4 aktiviert wird, was bedeutet, dass der Chargenprozess nach dieser Verarbeitung unterbrochen wird und das Programmiergerät eine entsprechende Anweisung dem Automatisierungsgerät übermittelt, welches daraufhin in einen Stopp-Zustand wechselt. Selbstverständlich können zur Unterscheidung der Kennzeichnungen diese in unterschiedlichen Farben angezeigt werden. In allen Fällen kann eine im Rahmen der Rezepterstellung formulierte Anmerkung in Textform vorgesehen werden, um während der Chargensteuerung dem Operator entsprechende Hinweise anzuzeigen, warum seine Unterbrechungsanforderung zurzeit nicht bzw. wann diese ausgeführt werden kann.

Falls z. B. der Operator die Dosierphase 4 unterbrechen will, um beispielsweise Wartungsarbeiten durchführen zu können, markiert er zunächst die Dosierphase 4 mittels der Bedieneingabe-Einheit. Anschließend wählt er ein Symbol 10 einer Menüleiste 11 an, wodurch der Operator eine Unterbrechungsanforderung erzeugt. Diese Unterbrechungsanforderung wird allerdings durch das Chargensteuerungsprogramm blockiert, weil im Rahmen der Rezepterstellung der Rezeptersteller die Dosierphase mit der Klammer 9 als nicht unterbrechbar kennzeichnete. Wie beschrieben, wird je nach Art der Kennzeichnung die Unterbrechungsanforderung blockiert bzw. ignoriert oder die Unterbrechungsanforderung zunächst blockiert und erst nach der Verarbeitung der Dosierphase 4 aktiviert.

## Patentansprüche

1. Verfahren zur Steuerung eines Rezeptes eines Chargenprozesses, das mehrere Rezeptphasen (4; 5) aufweist, wobei das Rezept auf einer Anzeigeeinheit dargestellt wird und wobei diesen Rezeptphasen (4; 5) zugeordnete Funktionsbausteine mittels eines Automatisierungsgerätes abgearbeitet werden, **dadurch gekennzeichnet, dass**
- aufgrund von Eingaben eines Rezepterstellers mindestens eine Rezeptphase (4; 5) selektiert wird,
- während der Bearbeitung der mindestens einen selektierten Rezeptphase (4, 5) eine Chargenunterbrechungsanforderung eines Anwenders blockiert wird.

2. Verfahren nach Anspruch 1, **dadurch gekennzeichnet, dass** die Chargenunterbrechungsanforderung erst nach der Bearbeitung der mindestens einen selektierten Rezeptphase (4, 5) aktiviert wird.

3. Verfahren nach Anspruch 1 oder 2, **dadurch gekennzeichnet, dass** die mindestens eine selektierte Rezeptphase (4, 5) auf der Anzeigeeinheit markiert dargestellt wird.

4. Computerprogramm, welches während seines Ablaufs auf einem Programmiergerät in Wirkverbindung mit einem Automatisierungsgerät ein Rezept eines Chargenprozesses steuert, wobei das Rezept mehrere Rezeptphasen (4; 5) aufweist und wobei das Rezept auf einer Anzeigeeinheit dargestellt ist und ferner das Automatisierungsgerät diesen Rezeptphasen (4; 5) zugeordnete Funktionsbausteine abarbeitet, **dadurch gekennzeichnet, dass** das Computerprogramm derart ausgestaltet ist,
- aufgrund von Eingaben eines Rezepterstellers mindestens eine Rezeptphase (4; 5) zu selektieren,
- während der Bearbeitung der mindestens einen selektierten Rezeptphase (4, 5) eine Chargenunterbrechungsanforderung eines Anwenders zu blockieren.

5. Computerprogramm nach Anspruch 4, **dadurch gekennzeichnet, dass** das Computerprogramm ferner derart ausgestaltet ist, die Chargenunterbrechungsanforderung erst nach der Bearbeitung der mindestens einen selektierten Rezeptphase zu aktivieren.

6. Computerprogramm nach Anspruch 4 oder 5, **dadurch gekennzeichnet, dass** das Computerprogramm ferner derart ausgestaltet ist, die mindestens eine selektierte Rezeptphase (4, 5) auf der Anzeigeeinheit **gekennzeichnet** darzustellen.

7. Programmiergerät mit einem Computerprogramm, welches während seines Ablaufs auf dem Programmiergerät in Wirkverbindung mit einem Automatisierungsgerät ein Rezept eines Chargenprozesses steuert, wobei das Rezept mehrere Rezeptphasen (4; 5) aufweist und wobei das Rezept auf einer Anzeigeeinheit des Programmiergerätes dargestellt ist und ferner das Automatisierungsgerät diesen Rezeptphasen (4; 5) zugeordnete Funktionsbausteine abarbeitet, **dadurch gekennzeichnet, dass** das Computerprogramm ferner derart ausgestaltet ist,
- aufgrund von Eingaben eines Rezepterstellers mindestens eine Rezeptphase (4; 5) zu selektieren,
- während der Bearbeitung der selektierten Rezeptphase (4, 5) eine Chargenunterbrechungsanforderung eines Anwenders zu blockieren.

8. Programmiergerät nach Anspruch 7, **dadurch gekennzeichnet, dass** das Computerprogramm ferner derart ausgestaltet ist, die Chargenunterbrechungsanforderung nach der Bearbeitung dieser mindestens einen selektierten Rezeptphase (4, 5) zu aktivieren.

9. Programmiergerät nach Anspruch 7 oder 8, **dadurch gekennzeichnet, dass** das Computerprogramm ferner derart ausgestaltet ist, die mindestens eine selektierte Rezeptphase (4, 5) auf der Anzeigeeinheit **gekennzeichnet** darzustellen.
